# EUROPEAN PATENT APPLICATION

(11) **EP 0 899 226 A1**
(43) Date of publication of application: **03.03.1999**
(21) Application number: 98202827.6
(22) Date of filing: 26.08.1998
(51) Int. Cl.: B65G 65/46, B60P 1/40, B01F 7/08, B01F 15/02

(54) **Device for mixing and discharging**

(30) Priority: 29.08.1997 NL 1006885
(71) Applicant: Bonda's Veevoederbureau B.V., 2182 GR Hillegom (NL)
(72) Inventor: Jonker, Jan, 2121 CW Bennebroek (NL)
(74) Representative: Bakker, Gilles Egbert, Ir.

(57) **Abstract**

The invention relates to a mixing and discharging device for products of natural origin, being provided with a reservoir (1) for the products to be mixed and discharged, conveyor screws (2,3,4) mounted horizontally in the reservoir (1) near its bottom, and a conveying system connecting to the horizontal conveyor screws and having a first approximately vertically extending conveyor screw (17). In order to be able to suitably mix the load with another product, in which the original structure is maintained, at least three conveyor screws (2,3,4) are provided, that can be independently driven, and in which adjacent screws have different diameters and an opposed pitch as far as possible.

## Description

The invention relates to a mixing and discharging device for products of substantially natural origin, said device being provided with a reservoir for the products to be mixed and discharged, conveyor screws mounted horizontally within the reservoir near its bottom, and a conveyor system connecting to the horizontal conveyor screws and having a conveyor screw extending approximately vertically.

Products of substantially natural origin include, among other things, various grains, by-products from the starch, sugar and potato processing industry and beer breweries, single concentrates for cattle farms, as well as other feeds for cattle farms. It will be obvious that is a non-restricting listing.

Such devices are used by applicant, in which the reservoirs are the containers of bulk vehicles, whether or not combined with those of possible trailers. This known device is used substantially for conveying and discharging a moist brewing by-product, the so-called "spent grains". This by-product originates from grain, more in particular from barley, and is used as cattle feed.

Said device is provided with two conveyor screws being driven simultaneously and by which a sufficient conveyor speed can be achieved for discharging the bulk vehicles. However, practice shows that by adding a dry product to the load during loading, it can only be partly discharged and that by far the largest portion of the load remains behind in the bulk vehicles. The load remaining behind is situated both between the conveyor screws and against the walls, and must then be brought within reach of the conveyor screws by the driver with the help of a tool, such as a scoop or a broom having a long stem. Thus, it is not possible to use said known device for mixing load and added products

Apart from being able to discharge the bulk vehicles quickly and efficiently, it is very important that the desired additives can be properly mixed with the product. Particularly important additives for spent grains are lemon pulp and beet root pulp, the dosage of which being generally 1-5% of the total weight of the load of spent grains and minerals.

The dry pulp is already added to the spent grains when filling the bulk vehicles. The pulp is capable of binding a major portion of the moist released from the spent grains as a result of which on arrival at the buyer's it is possible to deliver the spent grains almost free of leak water, which is not only particulary desirable, if not obligatory in connection to the regulations in view of the amount of released leak water from the spent grains, which is harmful for the environment, but also serves limitation of feed value losses during storage. The sugars in the pulp have a positive influence on the pH-value, and with that on the storage life and taste.

The sugars present in the pulp, which are easily fermented, can accelerate the formation of lactic acid in the spent grains, as a result of which the spent grains stored at the buyer will stabilize sooner and fermentation losses can be kept at a minimum. However, there is a condition that after the reasonable distribution of pulp in the spent grains obtained on loading it, the pulp can additionally be very thoroughly mixed with the spent grains.

A further disadvantage of the known device is that it is in fact only suitable for conveying and discharging spent grains.

Therefore, the object of the invention is to provide for a device that does not have said disadvantages, and by which additives, whether or not added simultaneously with the main product, can be mixed with it in such a way, that an almost homogeneous mixture can be discharged.

Accordingly, the invention provides for that the device has at least three conveyor screws extending approximately horizontally and in parallel, which can be driven individually. Further, it can be provided for, that the axes of the conveyor screws are approximately in one plane and that at least two of said conveyor screws also have an approximately equal diameter and an equal pitch.

Such an embodiment has the advantage that conveyor screws are mounted across a wide portion of the reservoir, as a result of which definitely the total amount of loaded product can be discharged without any extra help, and an additive can be properly mixed through the complete product too.

The latter is particularly important with an additive which will be added to the product only after loading the reservoir.

According to a preferred embodiment it is provided for, that the device has three conveyor screws, in which the axes of the two outer conveyor screws are situated approximately in a horizontal plane, and have an equal diameter and an equal pitch, and the axis of the central conveyor screw is situated above the plane extending through the axes of the outer conveyor screws, and the central conveyor screw has a larger diameter than the two outer conveyor screws. With this embodiment, it has also been provided for, that the conveyor screws have a common horizontal contact surface at their bottom sides.

This embodiment has the advantage that the contour of the central conveyor screw protrudes beyond the contact portions between approximately semi-cylindrical troughs in which the outer conveyor screws rotate and the trough of the central conveyor screw, as a result of which it is no longer possible that residues of the product will remain behind on said contact portions.

Practical tests have shown that an embodiment with three conveyor screws is greatly preferred over embodiments with more than three conveyor screws, since the space taken up by four or more screws, maintaining sufficient strength and capacity, will be such that they would not fit within the wheel housings of the existing and permitted truck frames. Due to this, the whole reservoir should be moved up, as a result of which the point of gravity of a loaded vehicle would be situated at an unacceptably high level.

Apart from the fact that the conveyor screws can be independently driven, according to another embodiment, the invention provides for, that adjacent conveyor screws have opposed pitches and are driven in opposite directions. By oppositely rotating conveyor screws, such an embodiment provides for that a considerable improvement in the mixing of product and additive is achieved.

With an embodiment having an odd number of conveyor screws, such as with the embodiment having three conveyor screws, this means that the outer conveyor screws rotate in the same direction. This could mean, in a way depending on the product present in the reservoir, that at one side the product will arrive in the free end of a conveyor screw more easily, i.e., in a smooth motion, and at the other side more gradually.

Therefore, according to another embodiment, the invention provides for that the outer conveyor screws have an oppositely directed pitch, and along the longitudinal axis of the conveyor screws, as seen in conveying direction, the conveyor screw situated at the left of the central conveyor screw or screws is driven in clockwise direction, and the conveyor screw situated at the right of the central conveyor screw or screws is driven in counterclockwise direction.

Said embodiment entails that with devices having an odd number of conveyor screws, not all adjacent conveyor screws can have an opposite direction of rotation. As stated before, this also holds for the preferred embodiment having three conveyor screws, in which the central conveyor screw has a larger diameter than the outer conveyor screws and protrudes beyond the outer conveyor screws. However, with this preferred embodiment, the loss of a set of conveyor screws rotating in opposite directions is largely compensated by the central conveyor screw projecting at both sides beyond the edges of its own trough. Owing to this, a sufficient exchange of conveyed material can take place at both sides of the central conveyor screw, as a result of which a proper mixing is guaranteed. Here, one has the advantage that the product is easily disengaged from the lateral walls in a smooth motion.

The last-mentioned fact is important if an additive must be admixed after the product has been brought into the reservoir. In the example of spent grains, this can be e.g. a mineral supplement which a cattle-farmer wishes to have incorporated in the feed ration.

Said supplement can be simply distributed across the top of the load. By having the three conveyor screws move simultaneously, a hole will arise in the load at the side opposite the side having the connecting conveying system. By the extent to which the total conveyance capacity is distributed across the screws and the easy disengagement of the load from the lateral wall, the free lateral part of the load will get approximately the shape of a conical surface part, along which the additive can be easily distributed from above by gravitation. This shape of the free side of the load is maintained until nearly at the end of the load, as a result of which firstly a proper distribution of the additive across the product is achieved, and subsequently a particularly good mixing thereof with the product as well.

As indicated, here the distribution of the conveying capacity across the conveyor screws is also of great importance, where according to the invention it is provided for that the collective conveying capacity of the two outer conveyor screws is between 90-130%, and preferably between 100-120% of the conveying capacity of the central conveyor screw.

By further providing for that the conveying capacity of the connecting conveying system is smaller than the collective conveying capacity of the conveyor screws mounted in the reservoir, some slip of the product along the screws will arise, as a result of which the mixing can be improved yet further. The difference in conveying capacity can correspondingly only be small, since otherwise the product will be damaged, which must be absolutely prevented in most cases.

With the device according to the invention it is possible to mix particularly well, as a result of which an extremely homogeneous mixture can be achieved. Furthermore, the mixture can be discharged quickly, easily and entirely, in which during discharging the entire load, the discharging capacity remains constant.

It is very important that with the homogeneous mixture discharged by the device, the original structure of the material is maintained, which, with cattle feeds such as e.g. spent grains, is decisive for the extent to which the product can be taken in and converted by cattle.

The device according to the invention has the further advantage of now being capable for conveying, mixing and discharging other products as well. This is because the conveyor screws can be driven independently, so that products having another weight, having more moisture, being more or less fibrous, having a different mutual adherence or correlation, can be discharged too. Discharging can be started e.g. with one conveyor screw, with only the outer conveyor screws or with only the central conveyor screw, whereupon one can change to an alternation of conveyor screws or an alternation of various combinations of conveyor screws, as a result of which much heavier products can be discharged as well.

This makes it possible that instead of driving back with an empty container after discharging the spent grains, another product such as grains, can be taken back, or be brought to a storage location. It is also possible to take along a part of another industrial by-product or of natural concentrates in addition to a part of spent grains, as a result of which a particularly differentiated delivery at one address will become possible.

In the following, the invention is elucidated by way of the drawing, in which:
Fig. 1 shows diagrammatically a view of a device according to the invention;
Fig. 2 shows diagrammatically a section across a first embodiment of three conveyor screws;
Fig. 3 shows diagrammatically a section across a second embodiment of three conveyor screws; and
Fig. 4 shows an example of three conveyor screws and accompanying transfer member.

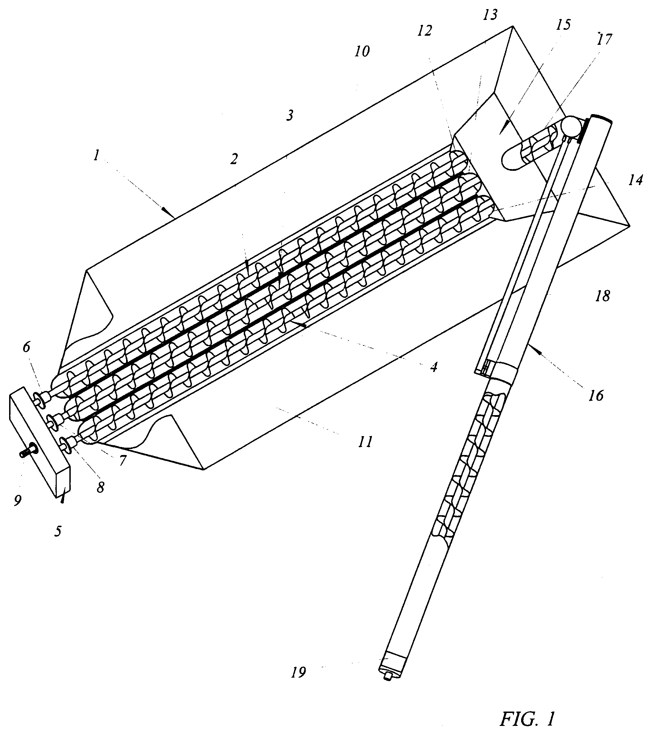

Fig. 1 shows a view of a device partly cut-away comprising a container 1, conveyor screws 2, 3, 4 mounted at the bottom in the container 1, a transfer member 5 at one side being coupled to said conveyor screws 2, 3, 4 through couplings 6, 7, 8, and which at another side can be coupled to a driving member not illustrated through a shaft 9.

In the drawing, at the side of the transfer member 5, the container 1 is cut-away, which side would otherwise be closed off by a vertical wall, in which the shafts of the conveyor screws 2, 3, 4 are fed through the wall with sealings.

The container 1 has sides 10, 11 descending obliquely in the direction of the conveyor screws. Said sides 10, 11 can change upwards into even steeper extending and vertical wall portions, to even overhanging wall portions.

At their ends, the conveyor screws open into a closed chamber 15 through apertures 12, 13, 14, from which chamber conveyance of the load is proceeded by the connecting conveying system 16. The connecting conveying system 16 has a first vertical portion 17 connecting to the chamber 15, and a further portion 18 rotatably connected with it, having a discharge opening 19 at its end. The vertical portion 17 is rotatable around a vertical shaft and the further portion 18 around a horizontal shaft, as a result of which the connecting conveying system has an amply sufficient reach.

Conveyance of the central conveyor screw 3 connects directly to the vertical portion 17 of the connecting conveying system 16. Conveyance through the outer conveyor screws ends laterally of the vertical portion 17. In order to prevent compaction and therefore damage of the product to be discharged, the outer conveyor screws are provided with a discharging member near their ends. A discharging member consists of a screw portion mounted on the shaft and having a pitch opposite to that of the conveyor screw and extending across at least a quarter turn, in which the transition is situated near the middle of the vertical portion 17 of the connecting conveying system.

By enclosure in the chamber 15, in which the conveyor screw is only clear at the side of the vertical portion 17, the conveyed load can only be discharged in the direction of the connecting conveying system.

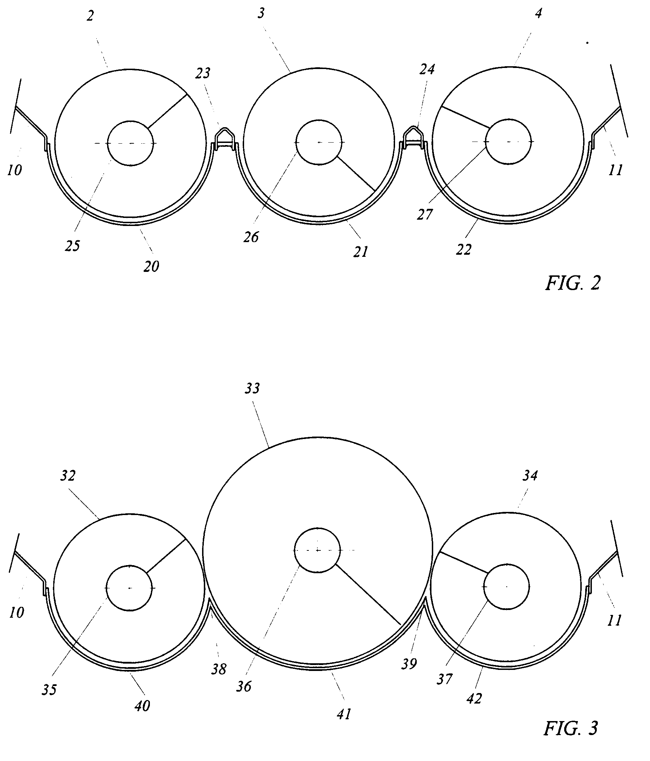

Fig. 2 shows diagrammatically a cross-section across three conveyor screws 2, 3, 4 of equal diameter, each situated in a trough 20, 21, 22 of its own. The shafts 25, 26, 27 of the conveyor screws are supported at predetermined spacings, which is not further indicated in the drawing, in such a way that the conveyor screws can always rotate free from the troughs. Further, in this embodiment, connecting parts 23, 24 descending obliquely to both sides have been mounted between the troughs, which prevents remainders of the transported product from remaining behind between the troughs.

Fig. 3 shows a further embodiment, in which the central conveyor screw 33 has a larger diameter than the one of the outer conveyor screws 32, 34. Said diameter is such that the conveyor screws move just free from each other. Due to this, the borderlines 38, 39 between the central trough 41 and the outer troughs 40, 42 will not only be situated below the axis through the shaft 36 of the central conveyor screw 33, but also below the axes extending through the shafts 35, 37 of the outer conveyor screws 32, 34, in which the distance between the borderlines 38, 39 is smaller than the diameter of the central conveyor screw 33.

In this embodiment, no special provisions are required to prevent remainders of the product from remaining behind between the troughs. Furthermore, on account of the relatively low-lying borders 38, 39 between the central trough 41 and the outer troughs 40, 42, conveyance of material between the central and outer conveyor screws is facilitated, which is very advantageous for mixing additives with the product. Said mixing is further improved by rotating the screws at different speeds.

Preferably, it is provided for, that the collective conveying capacity of the two outer conveyor screws is between 90-130%, and preferably between 100-120% of the conveying capacity of the central conveyor screw. If, apart from that, a difference in driving speed should be maintained, three completely identical conveyor screws will suffice in the embodiment according to Fig. 2.

Tests have shown that using three identical conveyor screws having a 20 cm diameter, in which the central screw performs approximately 100 rounds per minute, a total conveying capacity of 1 ton/minute can be easily achieved. Furthermore, the conveying capacity has proven to remain constant during discharging the total load.

With the example according to Fig. 3, in which the relation between the diameter of an outer conveyor screw and that of the central conveyor screw is about 1 : 1½ , in order to be able to achieve a proportional difference in the driving speeds like in the embodiment according to Fig. 2, the pitch of the central conveyor screw should be reduced.

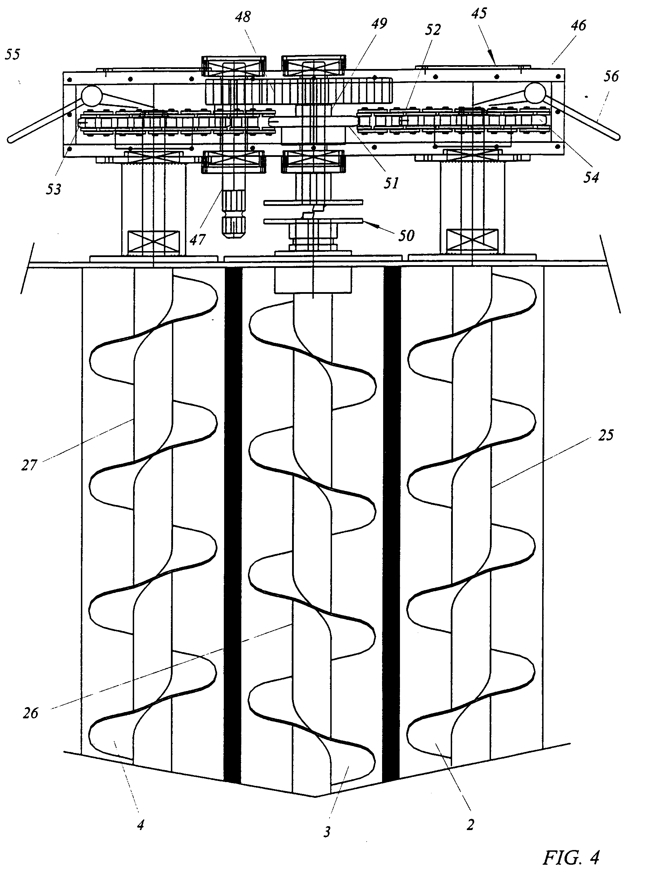

Finally, Fig. 4 shows a simple, yet particularly reliable and properly functioning transfer member 45, comprising a gear box 46 having a driven shaft 47, its driving taking place through a member not further indicated, such as a diesel engine. A belt or chain 48 drives the shaft 49, which can be coupled directly to the shaft 26 of the central conveyor screw 3 through a coupling 50. Preferably, it is provided for, that said coupling can be manually operated with a mechanical transmission.

A chain wheel 51 is mounted on the shaft 49 and engages endless chain 52b running around the chain wheels 53, 54 situated at both sides. The chain wheels 53, 54 are coupled to the shafts 25, 27 of the conveyor screws 2, 4 by means of couplings, the operating grips of which being indicated by 55, 56.

Here, the difference in driving speed of the various conveyor screws is determined by the relations between chain wheel 51 and the chain wheels 53 and 54, respectively. In this embodiment, successive conveyor screws rotate in opposite directions, and successive conveyor screws also have an opposite pitch. If the outer conveyor screws should both rotate away from the oblique walls, and therefore opposite to each other, a structure having engaging gear wheels can be provided, in which an additional gear wheel is mounted between the gear wheel of the central conveyor screw and the gear wheel of one of the outer conveyor screws.

Naturally it is also possible to drive the three shafts independently with hydraulic motors, in which the differences in speeds can be widely varied. However, this renders the structure unnecessarily complex, and furthermore has the further drawback, that with the inevitable use of quick-acting couplings in such a system, action of spent grains on the oil of the hydraulic system can not be prevented. Due to the specific acidity of spent grains, the oil of such a hydraulic system is attacked very quickly, as a result of which it has to be substituted after only a short period.

## Claims

1. Mixing and discharging device for products of substantially natural origin, said device being provided with a reservoir for the products to be mixed and discharged, conveyor screws mounted horizontally within the reservoir near its bottom, and a conveyor system connecting to the horizontal conveyor screws and having a conveyor screw extending approximately vertically, **characterized in** that the device has at least three conveyor screws extending approximately horizontally and in parallel, which can be driven individually.

2. Device according to claim 1, **characterized in** that the axes of the conveyor screws are approximately in one plane and that at least two of said conveyor screws also have an approximately equal diameter and an equal pitch.

3. Device according to claim 1, **characterized in** that the device has three conveyor screws, in which the axes of the two outer conveyor screws are situated approximately in a horizontal plane, and have an equal diameter and an equal pitch, and the axis of the central conveyor screw is situated above the plane extending through the axes of the outer conveyor screws, and the central conveyor screw has a larger diameter than the two outer conveyor screws.

4. Device according to claim 3, **characterized in** that the conveyor screws have a common horizontal contact surface at their bottom sides.

5. Device according to claim 1 - 4, **characterized in** that adjacent conveyor screws have opposed pitches and are driven in opposite directions.

6. Device according to claim 1 - 4, **characterized in** that the outer conveyor screws have an oppositely directed pitch, and along the longitudinal axis of the conveyor screws, as seen in conveying direction, the conveyor screw situated at the left of the central conveyor screw or screws is driven in clockwise direction, and the conveyor screw situated at the right of the central conveyor screw or screws is driven in counterclockwise direction.

7. Device according to one or more of the claims 3 - 6, in which the conveyor screws and part of the connecting conveying system end up in a chamber separated from the reservoir, **characterized in** that the central conveyor screw is square to a part of the connecting conveying system, and the outer conveyor screws have such a staggering in pitch at their outer ends that a motion component in the direction of the connecting conveying system is given to the conveyed product.

8. Device according to one or more of the claims 3 - 7, **characterized in** that the collective conveying capacity of the two outer conveyor screws is between 90-130%, and preferably between 100-120% of the conveying capacity of the central conveyor screw.

9. Device according to one or more of the claims 1 - 8, **characterized in** that the conveying capacity of the connecting conveying system is smaller than the collective conveying capacity of the conveyor screws mounted in the reservoir.

10. Device according to one or more of the claims 1 - 9, in which the conveyor screws are coupled to a drive mechanism through a gear box, **characterized in** that each driven conveyor screw is connected to a corresponding branch of the gear box by means of a mechanically operable coupling.
